# EUROPEAN PATENT APPLICATION

(11) **EP 3 860 078 A1**
(43) Date of publication of application: **04.08.2021**
(21) Application number: 20154851.8
(22) Date of filing: 31.01.2020
(51) Int. Cl.: H04L 29/06, B61L 25/02, H04W 12/10

(54) **METHOD, DEVICES, RAILWAY VEHICLE, COMPUTER PROGRAM AND COMPUTER-READABLE STORAGE MEDIUM OF STORING NETWORK INFORMATION**

(71) Applicant: Siemens Mobility GmbH, 81739 München (DE)
(72) Inventor: Lorenz, Matthias, 38159 Vechelde (DE); Seuschek, Hermann, 81373 München (DE); Weiberg, Bernd, 38300 Wolfenbüttel (DE)

(57) **Abstract**

The application provides a method of storing network information (NI), comprising the steps of:
- determining network information (NI) with a network tap (5) having a processing unit (7),
- dividing the determined network information (NI) into a plurality of sequences (SQ),
- adding to each sequence (SQ) a first information (I1) in the processing unit (7), said first information (I1) being representative of a sequence number, such that each sequence (SQ) and the respective first information (I1) form a block (B),
- signing at least one block (B) with a signature (SIG) such that a signed block (B) is generated, and
- storing the signed block (B) on a storage device.

Furthermore, a device, a signalling control, a railway vehicle, a computer program and a computer-readable storage medium are provided.

## Description

A method of storing network information is provided. Furthermore, a device, an industrial control device, a signaling controller, an interlocking, a railway vehicle, a computer program and a computer-readable storage medium are provided.

It is an object of the present application to provide a method of storing network information in a particularly secure manner. It is further intended to provide a device, a signaling controller, an interlocking, a railway vehicle and a computer program which can carry out such a method. In addition, a computer-readable storage medium containing the computer program is provided.

These objects are achieved by the method and subject-matters of claims 1, 7, 9 and 10. Advantageous embodiments, implementations and further developments are given in the respective dependent claims.

According to at least one embodiment of the method, network information is determined with a network tap having a processing unit. The network information is preferably part of a network, e.g. a computer network.

For example, the network comprises at least two electronic devices. In particular, the two electronic devices are computers. In this case the network is in particular a digital telecommunication network, wherein the devices can communicate with one another through a connection. In this case, the connection is preferably a digital telecommunication connection. Further, the connection connects the devices with one another. Preferably, the devices can send and receive network information between one another via the connection. Preferably, the network tap comprises an input port, a processing unit and an output port. The input port of the network tap is preferably configured to read the network information of the network. The processing unit of the network tap is preferably configured to process the network information read by the input port. The output port is preferably configured to transmit the processed network information, e.g. to a storage device.

The network tap preferably provides a passive access point to the network, allowing the network information of the connection to be read, processed and transmitted. In particular, the input port is formed to exclusively read the network information. For example, the network tap is configured to function in a unidirectional manner, i.e. the network tap is configured to read the network information but does not allow access to the network information within the connection of the network from the input port. Thus, the network tap cannot disturb the flow of information within the network, i.e. the network information within the connection.

Furthermore, the network tap has preferably no MAC address, such that the network tap is invisible in the network. Advantageously, the network tap can thus not be detected by an external attacker. This is in particular advantageous in network forensics, as otherwise the external attacker could take the presence of the network tap into account.

According to at least one embodiment of the method, the determined network information is divided into a plurality of sequences. For example, each sequence is formed from a partial quantity of the determined network information. This is to say that the network information is represented by the plurality of sequences.

Each sequence has preferably a predetermined size. In particular, the sizes of all sequences are equal to one another. All the sequences are in particular representative of the whole determined network information.

According to at least one embodiment of the method, a first information is added to each sequence in the processing unit, said first information being representative of a sequence number, such that each sequence and the respective first information form a block. Preferably, the sequence numbers are continuous sequence numbers. In particular, all sequence numbers are different from one another.

For example, the first sequence number corresponding to the first sequence is predetermined. E.g. the first sequence number is 1. Further, a sequence number, not being the first sequence number, is formed of an increment of its preceding sequence number. For example, directly adjoining sequence numbers differ by 1. Thus, the second sequence number is, for example, 2.

According to at least one embodiment of the method, at least one block is signed with a signature such that a signed block is generated. Preferably, the signed block comprises the at least one block and the signature. Preferably, the block is signed cryptographically. Thus, the signature is preferably a cryptographic signature, in particular a digital cryptographic signature. In this case, the signature is created by using an asymmetric cryptography method.

Furthermore, the signature is preferably created using the information contained in the block to be signed. In this case, the signature is created using the sequence and the first information of the block to be signed.

For example, the signature is formed to verify an authenticity of the signed block. A receiver of the signature thus preferably has a reason to believe that the signed block originates from the network tap.

According to at least one embodiment of the method, the signed block is stored on a storage device. Preferably, the network tap is connected to the storage device via the output port of the network tap to store the signed block. The storage device is, for example, an external storage device such that the storage device is not part of the network tap. The storage device is, for example, a personal computer (PC) and/or an external server, in particular a network attached storage (NAS) server.

Preferably, the network tap transmits the signed block, in particular the block and the respective signature, to the storage device via the output port. For example, the output port transmits the signed block to the storage device via a user datagram protocol (UDP) or a transmission control protocol/internet protocol (TCP/IP). Further, the network tap exclusively transmits the signed block, if there is a further connection to the output port of the network tap.

For example, if there is no network information to be determined, there are no sequences and thus no signed blocks to be transmitted and stored. In this case the network tap is configured to create a further block. This further block comprises information that there is currently no network information to be determined. For example, the further block comprises a keep alive signal. In addition, the further block can also be signed with the signature.

In at least one embodiment of the method of storing network information, the method comprises the steps of determining network information with the network tap having the processing unit, dividing the determined network information into a plurality of sequences, adding to each sequence a first information in the processing unit, said first information being representative of a sequence number, such that each sequence and the respective first information form a block, signing at least one block with a signature such that a signed block is generated, and storing the signed block on a storage device.

One idea of the method described herein is, inter alia, to divide the network information to be monitored into sequences and add to each sequence a sequence number. Subsequently, the block, comprising a sequence and the corresponding sequence number, is signed and stored on the storage device.

Since a sequence number is added to every sequence, it can be advantageously verified that the order of the blocks is correct. Furthermore, the authenticity of the signed block can be checked using the signature. In addition, by using the signature, the stored block can be protected against falsification and it can in particular be ensured that the stored block is not altered.

For example, the signed block comprises the block to be signed, i.e. the sequence and the first information, as well as the corresponding signature. This signature is therefore dependent on the sequence and the first information acquired in the processing unit. However, if the block, i.e. the sequence, stored on the storage device was altered afterwards, the signature would be different and would not correspond to the original signature of the signed block. In this case it can be assumed that the block has been altered, and it is no longer considered authentic because the signatures no longer match.

Such a method can be advantageously used in post-incident forensic analysis of network traffic, e.g. in cases of cybercrime or accidents, wherein network information obtained from the network tap is stored on the storage device. For using the method in a legal context, it is important that there is as much confidence in the integrity and authenticity of the network information as possible. It is important to be able to prove that the stored network information has not been altered after capturing. With the method described here, a modification of captured network information is advantageously prevented.

According to at least one embodiment of the method, a second information is added to each sequence in the processing unit, said second information being representative of a self-signed certificate and/or a certificate chain.

The certificate chain comprises an ordered list of certificates, preferably containing a X.509 certificate and root certificate authority (CA) X.509 certificates that enable a receiver of the block to verify that the network tap is trustworthy.

The certificate, in contrast to a certificate chain, is preferably a self-signed X.509 certificate. Such a certificate is not signed by the root certificate authority. These self-signed certificates are advantageously easy to make and are comparatively cost-effective.

According to an embodiment of the method, each sequence and the respective first information and the respective second information form a block.

According to a further embodiment of the method, the second information is added to every x-th sequence, wherein x is a natural number. In particular, x can be a natural number being larger than or equal to 2. For example, x can be predetermined dependent on a first time interval. In particular, the size of the first time interval presets x.

According to at least one embodiment of the method, a third information is added to each sequence in the processing unit, said third information being representative of a time stamp. The time stamp is preferably representative of a specific time interval. Preferably, the time stamp is synchronized with a reference clock.

According to an embodiment of the method, each sequence and the respective first information, the respective second information and the respective third information form a block. Alternatively, each sequence and the respective first information and the respective third information form a block.

According to at least one embodiment of the method, the first information is a random number. Preferably, the following sequences are formed of increments of this random number.

According to at least one embodiment of the method, the signature of the block is based on a HASH value of the block to be signed. Preferably, the HASH value is created with a HASH function of the block to be signed. The HASH value is preferably represented by a binary string or a hexadecimal character string, which is formed by numbers and/or letters. Preferably, all HASH values have the same length.

According to at least one embodiment of the method, the signature is produced with a private key of the network tap, in particular, the HASH value of the block to be signed using the private key of the network tap.

Preferably, the asymmetric cryptography method is used to sign the block. In this case, the network tap comprises a private key. The private key is preferably exclusively known to the network tap. Furthermore, the network tap comprises preferably a public key, not exclusively known to the network tap, which can be openly distributed.

For example, the private key and the public key are created during generation of the network tap. In particular, also the certificate and/or the certificate chain is/are imprinted onto the network tap during its generation. In this case, the network tap comprises the certificate and/or the certificate chain, wherein the certificate and/or the certificate chain is/are formed to certify that the private key is in possession of that particular network tap. Furthermore, the private key can preferably be protected from disclosure by hardware mechanisms.

For example, the network tap combines the block with the private key to create a signature. Anyone having the public key corresponding to the network tap can combine the same block and the supposed signature associated with it to verify whether the signature is valid, i.e. made by the network tap of the corresponding private key.

For example, the HASH value is created using the HASH function. Here, the HASH value is dependent on the block to be signed, i.e. the sequence and the first information. Subsequently, the private key is used to encrypt this HASH value. This encrypted HASH value thus preferably becomes the signature of the block to be signed. In particular, the HASH values as well as the signatures are different for each block.

The created signature as well as the block are stored on the storage device. In order to ensure that the signed block is intact and that it really originates from the network tap, the HASH value of the stored block can be created. Furthermore, the public key can be used to decrypt the signature resulting in the HASH value, created in the processing unit. A match of these HASH values confirms the authenticity of the signed block. Further, a match of these HASH values confirms that the content of the signed block, in particular the respective sequence, has not been altered. However, if the HASH values differ from one another, it is possible that the signed block has been altered after transmission from the output port.

Thus, using the private key to create the signature, an authentication of the signed block as well as the integrity of the stored network information is in particular secured.

According to at least one embodiment of the method, each block is individually signed, such that each block is signed with a different signature. In this case, each block comprises a single signature.

Alternatively, all the blocks are signed jointly, such that a single signature is assigned to all blocks. In this case, the second information is preferably added only to one of the sequences. For example, the second information is added to the first sequence or to the last sequence.

According to at least one embodiment of the method, the signature of a block comprises the signature of its preceding block. For example, when signing the block to be signed, the HASH value of the block to be signed is created. Subsequently the HASH value of the preceding block is, for example, added to the HASH value of the block to be signed. These two HASH values are then preferably signed using the private key. In this case, a chain of signatures is created.

According to at least one embodiment of the method, consecutive blocks formed of a partial quantity of the blocks are signed jointly, such that a single signature is assigned to the partial quantity of the blocks.

Preferably, y consecutive blocks form a partial quantity, wherein y is a natural number. In particular, y is a natural number being equal to or smaller than the total number of all blocks and larger than 2. Preferably, y is predetermined in a suitable manner. For example, the method is configured to sign jointly all the blocks of the partial quantity of the blocks after y consecutive blocks. For example, y can be predetermined dependent on a second time interval. In particular, the size of the second time interval presets y.

In this case, the signature is assigned to several blocks, thus being advantageously cost effective in terms of memory size.

According to at least one embodiment of the method, the signature of a partial quantity of the blocks comprises the signature of its preceding partial quantity of the blocks.

According to at least one embodiment of the method, the integrated processing unit is a field programmable gate array. By using the field programmable gate array, the method described here can advantageously be protected against manipulation.

Furthermore, a device is provided which is configured to perform the method described herein.

In addition, an industrial control device is provided comprising the device described herein. Further, an interlocking is provided comprising the device described herein.

Additionally, a signalling control is provided comprising the device described herein.

In addition a railway vehicle is provided, comprising the device described herein.

Furthermore, a computer program is specified, comprising instructions which, when the computer program is executed by a computer, cause the computer to carry out the method described herein. Further a computer-readable storage medium, on which the computer program is stored, is also provided.

The above-mentioned properties, features and advantages of the invention and the way in which they are achieved are further explained by the following description of the exemplary embodiments of the invention in connection with the corresponding Figures.

Identical, similar or similarly acting elements are marked with the same reference signs in the figures. The Figures and the proportions of the elements represented in the Figures are not to be regarded as true to scale. Rather, individual elements may be shown in excessive size for better representability and/or for better comprehensibility.

What the Figures show:
- Figure 1: a schematic representation of a device according to an exemplary embodiment,
- Figure 2: a schematic representation of a railway vehicle according to an exemplary embodiment,
- Figure 3: a flow chart of a method according to an exemplary embodiment, and
- Figure 4: an exemplary representation of a signed block.

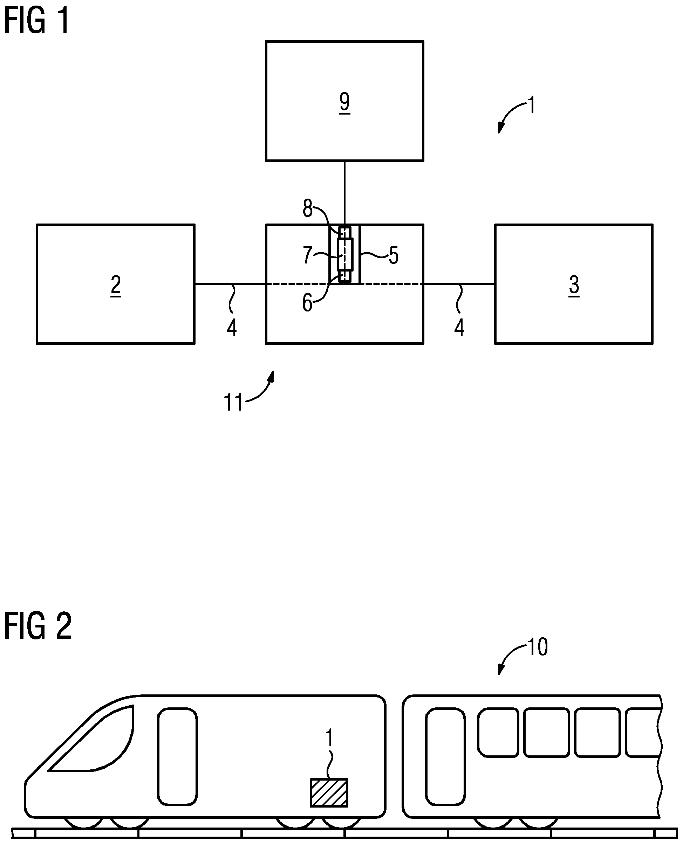

The device 1 according to the exemplary embodiment of Figure 1 comprises a network tap 5 and a storage device 9. The network tap 5 provides a passive access point to a network 11.

The network 11 comprises two electronic devices 2, 3. The two electronic devices 2, 3 are connected to one another by a connection 4. In this case, the devices 2, 3 can send and receive network information NI between one another via the connection 4. With the network tap 5 network information NI of the connection 4 can be read, processed and transmitted. Furthermore, the network tap 5 can solely read the network information NI, thus does not disturb the network 11, i.e. the network information NI within the connection 4.

The network tap 5 comprises an input port 6, a processing unit 7 and an output port 8. The network information NI to be monitored and read by the network tap 5 is storable on the storage device 9.

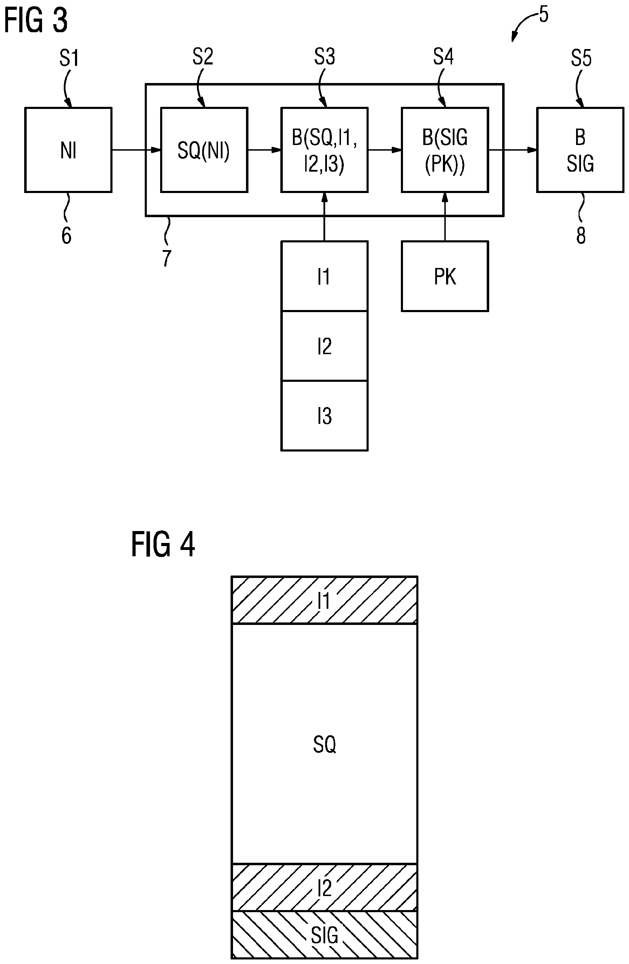

The device 1 is configured to perform the method described in connection with Figure 3.

The railway vehicle 10 according to the exemplary embodiment of Figure 2 comprises a device 1 which is configured to perform the method described in connection with Figure 3.

In the flow chart of the method according to the exemplary embodiment in Figure 3, network information NI is determined in a first method step S1. The network information NI is determined with a network tap 5, in particular via an input port 6.

In a further method step S2, the determined network information NI is divided into a plurality of sequences SQ. This method step is performed in a processing unit 7 of the network tap 5, which is described in connection with Figure 1.

In method step S3, first information I1, second information I2 and third information I3 is added to each sequence SQ in the processing unit 7.

The first information I1 is representative of a sequence number. Here, the sequence numbers are continuous sequence numbers. One piece of first information I1, i.e. a single sequence number, is added subsequently to every sequence SQ, such that each sequence SQ is assigned to a different piece of first information I1.

Further, the second information I2 is representative of a certificate and/or a certificate chain. The second information I2 is added subsequently to every sequence SQ, such that each sequence SQ is assigned to the second information 12. In particular, the second information I2 is the same for every sequence SQ.

In addition, the third information I3 is representative of a time stamp. Here, the time stamp is representative of a time of a reference clock. One piece of third information 13, i.e. a time stamp, is added subsequently to every sequence SQ, such that each sequence SQ is assigned to a different piece of third information 13.

Each sequence SQ and the respective first information I1, the respective second information I2 and the respective third information I3 form a block B.
In a further method step S4, at least one block B is signed with a signature SIG such that a signed block B is generated. For example, a HASH value of the block B is created. Thus, the HASH value is dependent on the block B and consequently dependent on the respective sequence SQ and the respective first information I1, the respective second information I2 and the respective third information 13. Within method step S4, a private key PK of the network tap 5 is, for example, used to digitally sign this HASH value by leveraging a private key PK to become the signature SIG of the block B.

The created signature SIG as well as the block B, i.e. the signed block B, can subsequently be transmitted in method step S5 via an output port 8 to a storage device 9, as described in connection with Figure 1.

The signed block B comprises one of the sequences SQ. Further, the signed block B comprises first information I1 being representative of a sequence number and second information I2 being representative of a certificate and/or a certificate chain. The first information I1 and the second information I2 surround the sequence SQ. In addition, the signed block B comprises a signature SIG being dependent on the sequence SQ, the first information I1 and the second information 12.

Although the invention has been presented and described in detail on the basis of exemplary embodiments, the invention is not limited to the disclosed exemplary embodiments and the concrete combinations of features explained therein. Further variations of the invention can be obtained by a person skilled in the art without leaving the scope of protection of the claimed invention.

### Reference sings

- 1: device
- 2: electronic device A
- 3: electronic device B
- 4: connection
- 5: network tap
- 6: input port
- 7: processing unit
- 8: output port
- 9: storage device
- 10: railway vehicle
- 11: network

- S1...S5: method steps

- NI: network information
- SQ: sequences
- I1: first information
- I2: second information
- I3: third information
- PK: private key
- B: block
- SIG: signature

## Claims

1. Method of storing network information (NI), comprising the steps of:
- determining network information (NI) with a network tap (5) having a processing unit (7),
- dividing the determined network information (NI) into a plurality of sequences (SQ),
- adding to each sequence (SQ) a first information (II) in the processing unit (7), said first information (II) being representative of a sequence number, such that each sequence (SQ) and the respective first information (II) form a block (B),
- signing at least one block (B) with a signature (SIG) such that a signed block (B) is generated, and
- storing the signed block (B) on a storage device (9).

2. Method according to claim 1, further comprising:
adding a second information (12) to each sequence (SQ) in the processing unit (7), said second information (12) being representative of a certificate and/or a certificate chain.

3. Method according to any of the preceding claims, further comprising:
adding a third information (13) to each sequence (SQ) in the processing unit (7), said third information (13) being representative of a time stamp.

4. Method according to any of the preceding claims, wherein the first information (II) is a random number.

5. Method according to any of the preceding claims, wherein
- the signature (SIG) of the block (B) is based on a HASH value of the block (B) to be signed, and
- the signature (SIG) is produced with a private key (PK) of the network tap (5).

6. Method according to any of the preceding claims, wherein each block (B) is individually signed, such that each block (B) is signed with a different signature (SIG).

7. Method according to claim 6, wherein the signature (SIG) of a block (B) comprises the signature (SIG) of its preceding block (B).

8. Method according to one of claims 1 to 5, wherein consecutive blocks (B) formed of a partial quantity of the blocks (B) are signed jointly, such that a single signature (SIG) is assigned to the partial quantity of the blocks (B).

9. Method according to claim 8, wherein the signature (SIG) of a partial quantity of the blocks (B) comprises the signature (SIG) of its preceding partial quantity of the blocks (B) .

10. Method according to any of the preceding claims, wherein the integrated processing unit (7) is a field programmable gate array.

11. Device (1) configured to perform the method according to any of claims 1 to 10.

12. Signalling control comprising a device (1) according to claim 11.

13. Railway vehicle (10) comprising a device (1) according to claim 11.

14. Computer program comprising instructions which, when the computer program is executed by a computer, cause the computer to carry out the method according to one of claims 1 to 10.

15. Computer-readable storage medium having stored thereon the computer program according to claim 14.
